Europäisches Patentamt

European Patent Office

Office européen des brevets

(11) Numéro de publication: **0 375 528**
**A1**

# DEMANDE DE BREVET EUROPEEN

(21) Numéro de dépôt: **89403515.3**

(51) Int. Cl.5: **G02B 7/18**

(22) Date de dépôt: **15.12.89**

(30) Priorité: **21.12.88 FR 8816923**

(43) Date de publication de la demande:
**27.06.90 Bulletin 90/26**

(84) Etats contractants désignés:
**AT BE CH DE ES GB GR IT LI LU NL**

(71) Demandeur: **PRECIACIER SA, Société Anonyme**
**Rue de Pont - B.P. 10**
**F-58170 Luzy(FR)**

(72) Inventeur: **Gautheron, François**
**Cité Le Mattrait**
**F-58170 Luzy(FR)**

(74) Mandataire: **Bruder, Michel et al**
**Cabinet Michel Bruder Conseil en Brevets**
**10, rue de la Pépinière**
**F-75008 Paris(FR)**

(54) **Dispositif de manipulation d'un miroir réfléchissant la lumière.**

(57) Dispositif de manipulation d'un miroir réfléchissant la lumière comprenant un support de miroir disposé dans un boîtier de préférence circulaire, solidaire d'un logement prévu à un coude du conduit à l'intérieur duquel se propage la lumière qui se trouve déviée d'un angle identique à celui du coude du conduit, caractérisé en ce qu'au moins deux ergots (7) et de préférence trois, régulièrement disposés en saillie autour du couvercle (6) du boîtier (3), viennent s'encastrer dans plusieurs crans (8) correspondant auxdits ergots (7) et prévus à cet effet dans le corps dudit boîtier (3), procurant ainsi un verrouillage à baïonnette dudit support de miroir (2) dans ledit boîtier (3).

On destine particulièrement le dispositif de manipulation conforme à l'invention au changement rapide des miroirs de déviation de faisceau sur les machines à découper ou à souder au laser.

_Fig.1_

Xerox Copy Centre

L'invention concerne un dispositif de manipulation d'un miroir réfléchissant la lumière, disposé au coude d'un conduit à l'intérieur duquel elle se propage, ladite lumière se trouvant déviée d'un angle identique à celui dudit coude.

Le domaine de l'invention est plus particulièrement celui des machines à découper ou à souder au laser. Sur ces machines, le faisceau laser se propage dans un conduit reliant la source laser au poste terminal d'utilisation du faisceau qui est ainsi réfléchi dans des coudes successifs par des miroirs dont la position et l'orientation doivent être parfaitement déterminées.

Classiquement, un miroir est fixé sur un support muni de vis de réglage fin associées à des vis de contre blocage permettant de verrouiller l'ensemble après réglage. Un grave inconvénient de ce dispositif est le déréglage de tout le chemin optique de la machine lors du changement d'un seul des miroirs placés aux coudes des conduits ; l'opération de maintenance est donc complexe, longue et onéreuse.

On connaît des systèmes remédiant partiellement à ces inconvénients. Le Brevet US-4 648 692 décrit ainsi un dispositif de manipulation d'un miroir réfléchissant comprenant un support de miroirs qui est disposé, au moyen d'un ressort, dans un logement prévu au coude du conduit ; ce dispositif s'affranchit du réglage de la position du miroir par rapport au chemin optique préréglé, mais il possède deux graves inconvénients : d'une part, des vis de réglage fin demeurent nécessaires au réglage de l'orientation du miroir qui doit donc être refait à chaque changement dudit miroir et d'autre part, l'accès au miroir se fait par l'intérieur du conduit, ce qui nécessite de complexes opérations de démontage dudit conduit.

On connaît par ailleurs le dispositif de positionnement d'un miroir réfléchissant au coude d'un conduit décrit dans le Brevet EP-0 054 295 : dans ce dispositif, le miroir s'appuie sur une embase définissant la surface de réflexion de la lumière, une bague, par exemple en caoutchouc, venant s'appuyer sur la face arrière du miroir, le tout étant maintenu au support placé au coude au moyen d'un couvercle à vis qui compresse uniformément la bague contre la surface arrière du miroir. Un inconvénient majeur de ce dispositif demeure le réglage approximatif de l'orientation du miroir, en raison du contact hyperstatique procuré par l'embase prévue dans le corps du support et de la pression, dépendant de l'épaisseur du miroir, qu'exerce le couvercle à vis sur l'ensemble constitué par la bague et le miroir. Un autre inconvénient du dispositif est la difficulté d'extraction du miroir.

La présente invention remédie à ces inconvénients en procurant un dispositif permettant un démontage simple et rapide du miroir , sans modifier sa position, ni son orientation ; le gain de temps obtenu pour effectuer de tels changements est de l'ordre de 90 % par rapport aux anciens systèmes.

L'invention est ainsi parfaitement décrite en tant que dispositif de manipulation d'un miroir réfléchissant la lumière comprenant un support de miroir disposé dans un boîtier, de préférence circulaire, solidaire d'un logement prévu à un coude du conduit à l'intérieur duquel se propage la lumière qui se trouve alors déviée d'un angle identique à celui du coude du conduit, caractérisé en ce qu'au moins deux ergots et de préférence trois, régulièrement disposés en saillie autour du couvercle du boîtier, viennent s'encastrer dans plusieurs crans correspondants auxdits ergots et prévus à cet effet dans le corps dudit boîtier, procurant ainsi un verrouillage à baïonnette dudit support de miroir dans ledit boîtier.

Il apparaît donc que le verrouillage du support de miroir dans le boîtier s'obtienne en plaquant le support de miroir dans le boîtier, en orientant le couvercle sur le support de façon à faire correspondre les ergots aux crans prévus dans le corps du boîtier, un petit mouvement de rotation s'avérant alors nécessaire pour encastrer les ergots dans les crans. La position du couvercle est ainsi parfaitement déterminée, ce qui n'est pas le cas des dispositifs équipés d'un couvercle à vis. Le couvercle conforme à l'invention constitue donc un premier plan fixe de référence sur lequel agissent les moyens de maintien du support de miroir dans le boîtier, un deuxième plan fixe de référence étant constitué par les éléments où s'appuie le miroir à l'avant dudit boîtier et qui seront mieux décrits dans la description qui va suivre. La pression exercée sur le miroir dans son logement est ainsi indépendante du verrouillage du couvercle dans le boîtier. Le changement du miroir peut ainsi être réalisé par un personnel n'ayant reçu aucune formation particulière.

D'autres caractéristiques et avantages du dispositif conforme à l'invention ressortiront mieux de la description qui va suivre d'une forme d'exécution non limitative de la présente invention en référence aux dessins annexés sur lesquels :

la figure 1 est une vue en coupe du dispositif de manipulation du miroir réfléchissant placé au coude du conduit dans le plan déterminé par l'axe du faisceau incident et l'axe du faisceau réfléchi.

- la figure 2 est une vue en plan du boîtier muni du support de miroir et du couvercle dans le plan du miroir.

- la figure 3 est une vue en plan du support du miroir extrait du boîtier au moyen d'un ressort d'extraction.

- la figure 4 est une vue en coupe détaillant les moyens de maintien, de compression et d'extraction du support de miroir dans le boîtier, du dispositif conforme à l'invention.

- la figure 5 est une vue en plan du support de miroir et du miroir, conformes à l'invention, avant montage.

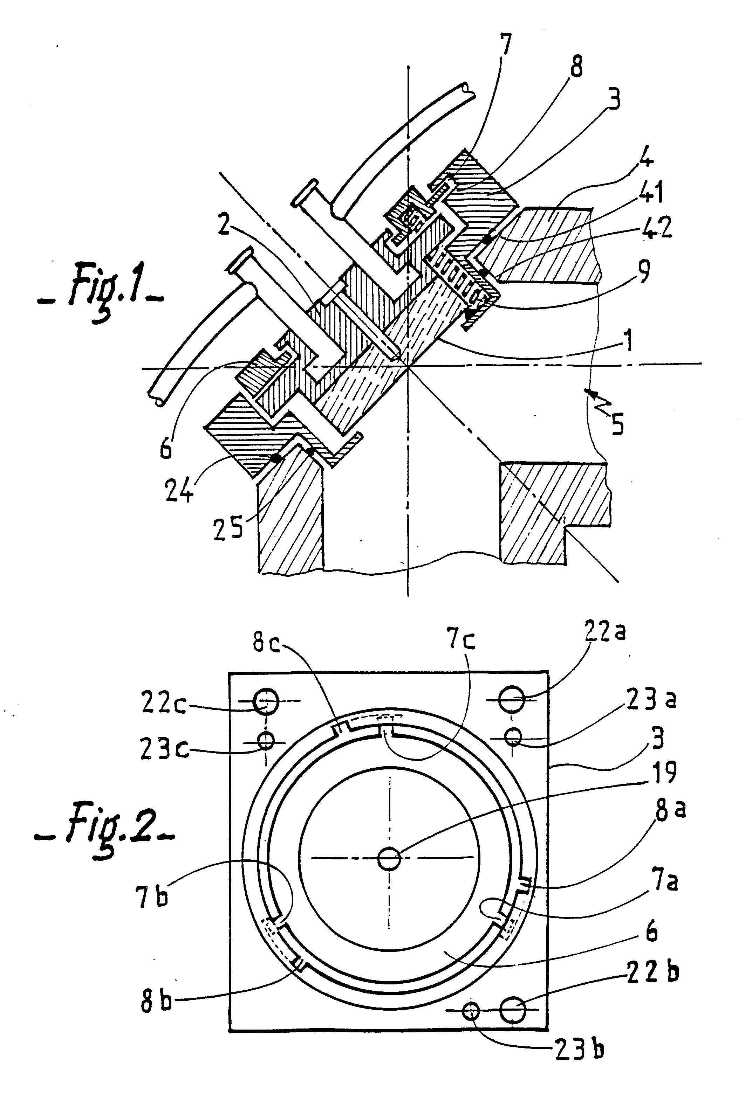

Conformément à la figure 1 et à la figure 2, le miroir 1 est solidaire du support de miroir 2, l'ensemble étant placé dans un boîtier 3 solidaire d'un logement 4 prévu au coude 5 du conduit où se propage le faisceau laser. Le couvercle 6 du boîtier 3 est muni de trois ergots 7a, 7b, 7c venant s'encastrer dans trois crans 8a, 8b, 8c prévus à cet effet dans le corps du boîtier 3. Dans cette variante de réalisation de l'invention, les ergots et les crans correspondant à ces ergots sont donc disposés régulièrement de façon à définir avec l'axe central du dispositif des secteurs angulaires égaux à 120°.

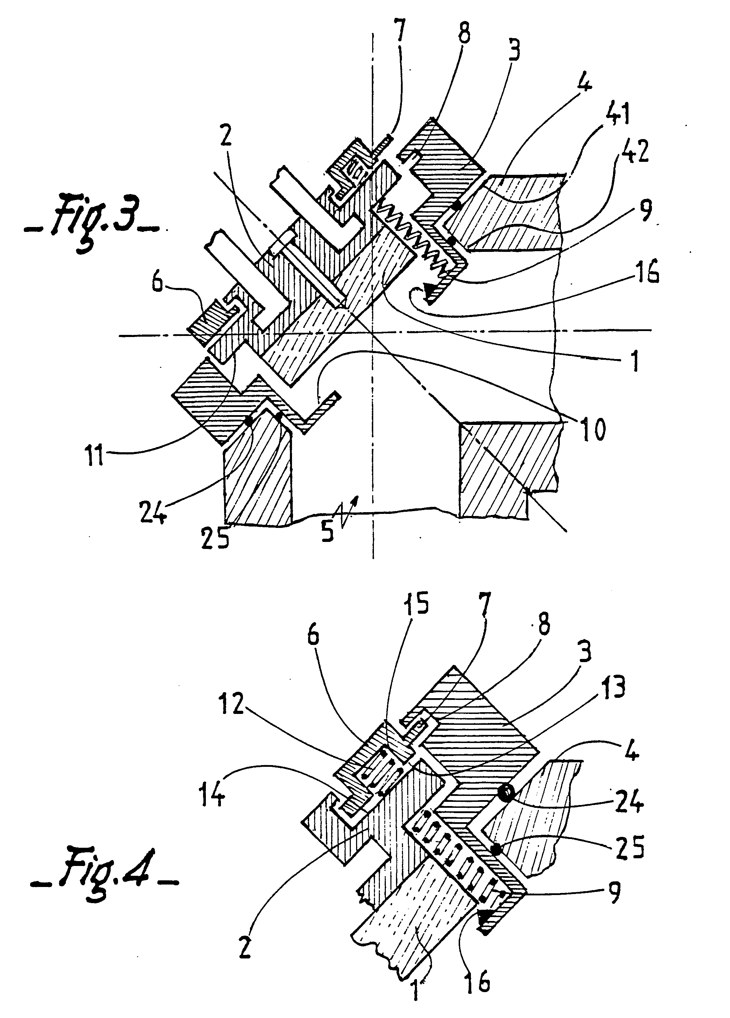

La figure 3 représente l'action des moyens ajustables d'extraction du support du miroir hors du boîtier. Les ergots 7 sont désencastrés des crans 8 par une petite rotation, ce qui permet alors à un ressort 9 placé entre la face arrière 10 du boîtier 3 et la face interne 11 du support de miroir de procurer l'effet juste suffisant au soulèvement du support de miroir 2 hors du boîtier 3 ; ce ressort possède une grande amplitude et une puissance peu supérieure au poids de l'ensemble à soulever. Il est évident que ce ressort peut être remplacé par tout autre moyen ajustable d'extraction.

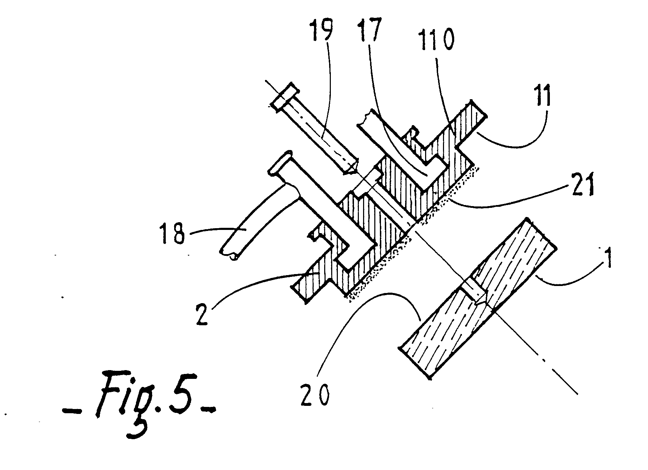

Conformément à la figure 4, des ressorts 12 de raideur constante et invariable, sont placés entre la face interne 13 du couvercle 6 et la face externe 14 du support de miroir 2, des logements 15 permettant le positionnement desdits ressorts 12 des logements qui maintiennent le miroir 1 en appui positif sur trois points d'appui 16 situés à l'aplomb desdits ressorts 12 et solidaires de la face arrière 10 du boîtier 3. Il ressort donc bien de cette description que la pression exercée par le miroir 1 sur les trois points d'appui 16 de la face arrière 10 du boîtier 3 ne dépend en aucune façon de l'expérience du personnel chargé de la manipulation du miroir réfléchissant 1. Par ailleurs, il est à noter que ce dispositif s'adapte automatiquement à toutes les épaisseurs de miroir 1, aucun réglage supplémentaire n'étant nécessaire lors du changement du miroir. Enfin, tous moyens de compression équivalents à des ressorts peuvent être employés pour maintenir le miroir 1.

Il est généralement nécessaire, en raison des puissances importantes transportées par le faisceau laser et des pertes pratiquement inéluctables dues à une réflexion incomplète du faisceau laser sur le miroir réfléchissant 1, de favoriser le refroidissement du miroir 1 et de son support 2. Un avantage complémentaire et inattendu du dispositif conforme à l'invention est la facilité et la sécurité du refroidissement du miroir 1 réfléchissant. Conformément à la figure 5, une cavité 17 est réalisée dans le corps du support de miroir 2. On obtient ainsi une chambre interne à ce support 2 dans laquelle peut circuler un fluide de refroidissement, par exemple de l'eau. Cette chambre interne est reliée à un circuit externe 18. On évite ainsi toute fuite du fluide de refroidissement, en particulier lors des manipulations du dispositif conforme à l'invention.

De la même façon, une vis 19 disposée dans l'axe central du support de miroir 2, permet l'assemblage du miroir 1 sur le support de miroir 2 en emprisonnant entre la face arrière 20 du miroir 1 et la face interne 110 du support de miroir 2, une graisse thermique 21 qui procure une conduction thermique accrue entre ledit miroir 1 et son support 2. Le refroidissement du miroir est ainsi parfaitement réalisé.

Une caractéristique complémentaire du dispositif selon l'invention est de permettre le réglage de la position et de l'orientation du boîtier 3 d'une manière définitive. Conformément à la figure 2, on a prévu, à cet effet, trois vis vérin à pas différentiel 22a, 22b et 22c permettant de régler la position et l'angle du plan déterminé par les trois points d'appui 16 du miroir 1 sur la face arrière 10 du boîtier 3, trois vis de contre blocage 23a, 23b et 23c disposées à côté des vis vérins à pas différentiel 22 procurant alors un verrouillage définitif du boîtier 3 dans son logement 4. On observera qu'un premier joint d'étanchéité 24 est prévu entre le boîtier 3 et la face externe 41 du boîtier 4 ; ce joint 24, avantageusement du type torique, présente une section suffisante pour rester efficace qu'elle que soit la position et l'orientation relative du boîtier 3 par rapport au logement 4 du coude 5. Un second joint 25 d'isolement poussière est enfin disposé entre la face radiale 42 du boîtier 4 et la face en regard du boîtier 3 ; ce joint 25, également torique, est avantageusement maintenu entre deux lèvres circulaires ménagées à cet effet tout autour du boîtier 3.

Il ressort donc bien de la description précédente qu'à chaque changement d'optique, le nouveau miroir 1 vient se plaquer d'une manière sûre et immédiate contre les trois points d'appui 16 prévus au fond du boîtier 3 dont le positionnement est invariable, ce positionnement étant généralement réalisé en usine lors de la fabrication du dispositif.

Il est accessoirement prévu de disposer une arrivée d'air comprimé (non représentée sur les dessins), au centre du coude 5 de déviation du faisceau, de manière à souffler sur le miroir 1, de façon continue ou contrôlée, pour la débarrasser de tout dépôt ou poussière pouvant exister en superficie dudit miroir 1.

La variante d'exécution de l'invention décrite ici ne limite en aucune façon la généralité des moyens employés qui caractérisent parfaitement l'invention : notamment, tout système de verrouillage à baïonnette séparant les effets de maintien du support de miroir 2 dans son boîtier 3 et les effets de pression exercés par ce miroir 1 d'une façon invariable sur un plan de référence, réglé par ailleurs, ne sortiraient pas du cadre de l'invention.

On destine le dispositif de manipulation, conforme à l'invention, au changement rapide des miroirs de déviation de faisceau ; le dispositif est particulièrement adapté aux machines à découper ou à souder au laser.

## Revendications

1 - Dispositif de manipulation d'un miroir réfléchissant la lumière comprenant un support de miroir disposé dans un boîtier de préférence circulaire, solidaire d'un logement prévu à un coude du conduit à l'intérieur duquel se propage la lumière qui se trouve déviée d'un angle identique à celui du coude du conduit, caractérisé en ce qu'au moins deux ergots (7) et de préférence trois, régulièrement disposés en saillie autour du couvercle (6) du boîtier (3), viennent s'encastrer dans plusieurs crans (8) correspondant auxdits ergots (7) et prévus à cet effet dans le corps dudit boîtier (3), procurant ainsi un verrouillage à baïonnette dudit support de miroir (2) dans ledit boîtier (3).

2 - Dispositif de manipulation d'un miroir réfléchissant la lumière selon la revendication 1 caractérisé en ce que des moyens ajustables (9), particulièrement des ressorts de grande amplitude, placés entre la face arrière (10) du boîtier (3) et la face interne (11) du support de miroir (2) procurent un effet juste suffisant à une extraction aisée dudit support de miroir (2) hors dudit boîtier (3).

3 - Dispositif de manipulation d'un miroir réfléchissant la lumière selon l'une quelconque des revendications précédentes caractérisé en ce que des ressorts (12) de raideur constante et invariable placés entre la face interne (13) du couvercle (6) et la face arrière (14) du support de miroir (2) dans des logements (15) prévus à cet effet dans ledit couvercle (6) maintiennent le miroir (1) en appui positif sur trois points d'appui (16), situés à l'aplomb desdits ressorts (12), et solidaires de la face arrière (10) du boîtier (3).

4 - Dispositif de manipulation d'un miroir réfléchissant la lumière selon l'une quelconque des revendications précédentes caractérisé en ce qu'on réalise une cavité (17) dans le corps du support du miroir (2), dans laquelle peut circuler un fluide de refroidissement, ce qui permet d'éviter toute fuite de ce fluide, en particulier lors des manipulations du support de miroir (2).

5 - Dispositif de manipulation d'un miroir réfléchissant la lumière selon l'une quelconque des revendications précédentes caractérisé en ce qu'une vis (19), disposée dans l'axe central du support de miroir (2), permet l'assemblage du miroir (1) sur le support de miroir (2), ledit assemblage emprisonnant entre la face arrière (20) dudit miroir (1) et la face interne (110) dudit support de miroir (2) une graisse thermique (21) procurant une conduction thermique accrue entre ledit miroir (1) et son support (2).

_Fig.1_

_Fig.2_

_Fig.3_

_Fig.4_

19  17  110  11

18

21

2  20  1

_Fig.5_

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,A | US-A-4 648 692 (T. KINOSHITA)<br>* En entier *<br>--- | 1 | G 02 B 7/18 |
| A | US-A-3 642 353 (R.H. FIELD)<br>* Colonne 3, ligne 52 - colonne 5, ligne 67; figures 1-8 *<br>--- | 1 | |
| A | EP-A-0 237 987 (CINCINNATI MILACRON INC.)<br>* Page 5, ligne 4 - page 7, ligne 17; figure 7 *<br>--- | 1,3 | |
| A | US-A-3 836 236 (R.F. KIRK et al.)<br>* Colonne 2, ligne 34 - colonne 4, ligne 20; figures 1-5 *<br>----- | 1,4,5 | |

**DOMAINES TECHNIQUES RECHERCHES (Int. Cl.5)**

G 02 B 5/00
G 02 B 7/00
H 01 S 3/00
B 23 K 26/00

Le présent rapport a été établi pour toutes les revendications

| Lieu de la recherche | Date d'achèvement de la recherche | Examinateur |
|---|---|---|
| LA HAYE | 01-02-1990 | SARNEEL A.P.T. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)